# EUROPÄISCHE PATENTSCHRIFT

(11) **EP 1 896 739 B1**
(45) Veröffentlichungstag und Bekanntmachung des Hinweises auf die Patenterteilung: **06.04.2011**
(21) Anmeldenummer: 06761708.4
(22) Anmeldetag: 27.06.2006
(51) Int. Cl.: F16C 19/16, F16C 19/36, F16C 33/32, F16C 33/34

(54) **RADIALWÄLZLAGER, INSBESONDERE EINREIHIGES RILLEN- ODER SCHRÄGWÄLZLAGER**
RADIAL ANTIFRICTION BEARING, PARTICULARLY A SINGLE-ROW GROOVED ANTIFRICTION BEARING OR ANGULAR CONTACT ANTIFRICTION BEARING
PALIER A ROULEMENT RADIAL, NOTAMMENT PALIER A ROULEMENT OBLIQUE OU CANNELE A UNE SEULE RANGEE

(30) Priorität: 28.06.2005 DE 102005029984
(43) Veröffentlichungstag der Anmeldung: 12.03.2008
(73) Patentinhaber: Schaeffler Technologies GmbH & Co. KG, 91074 Herzogenaurach (DE)
(72) Erfinder: HOFMANN, Heinrich, 97422 Schweinfurt (DE); DÖPPLING, Horst, 91074 Herzogenaurach (DE); PLANK, Robert, 91085 Weisendorf (DE); GRUNAU, Arbogast, 91085 Weisendorf (DE)
(86) Internationale Anmeldenummer: PCT/DE2006/001096
(87) Internationale Veröffentlichungsnummer: WO 2007/000150

(56) Entgegenhaltungen:
- EP-A1- 1 035 339
- CH-A- 99 346
- DE-A1- 4 334 195
- DE-A1- 10 042 901
- DE-C1- 10 004 584
- DE-U1- 20 019 969
- US-A- 4 741 632

## Beschreibung

### Gebiet der Erfindung

Die Erfindung betrifft ein Radialwälzlager nach den oberbegriffsbildenden Merkmalen des Patentanspruchs 1, und sie ist insbesondere vorteilhaft an einreihigen Rillen- oder Schrägwälzlagern realisierbar.

### Hintergrund der Erfindung

Dem Fachmann in der Wälzlagertechnik ist es allgemein bekannt, dass einreihige Rillenkugellager eine klassische Form starrer, nicht zerlegbare Radialwälzlager darstellen, die im Radius wenig größer als der Kugelradius ausgebildete tiefe Rillen aufweisen und sich vor allem dadurch auszeichnen, dass deren radiale und axiale Tragfähigkeit gleichermaßen hoch ist und dass diese wegen ihrer geringen Reibung die höchsten Drehzahlgrenzen aller Lagerarten aufweisen. Einreihige Schrägkugellager sind dagegen eine zerlegbare oder nicht zerlegbare weitere Form von Radialwälzlagern, da deren Laufbahnen so angeordnet sind, dass die auftretenden Kräfte unter einem bestimmten Druckwinkel schräg zur Radialebene von einer Laufbahn auf die andere übertragen werden. Wegen ihres Druckwinkels sind Schrägkugellager jedoch für die Aufnahme größerer Axialkräfte besser geeignet als Rillenkugellager, wobei Radialkräfte durch einreihige Schrägkugellager nur übertragen werden können, wenn sie zugleich axial belastet sind. Diese einreihigen Rillenkugellager und Schrägkugellager sind seit langem bekannt und bestehen im Wesentlichen aus einem äußeren Lagerring und einem inneren Lagerring sowie aus einer Vielzahl zwischen den Lagerringen angeordneten Kugeln als Wälzkörpern. Dabei sind in die Innenseite des äußeren Lagerrings und in die Außenseite des inneren Lagerrings jeweils durch eine oder zwei Schultern begrenzte Kugellaufbahnen eingearbeitet in denen die Kugeln mit ihren Laufflächen abrollen und durch einen Lagerkäfig in gleichmäßigen Abständen zueinander geführt werden.

Bei solchen Rillen- oder Schrägkugellagern hat sich die notwendigerweise unterschiedliche Ausbildung der Laufbahnradien gegenüber den Kugelradien jedoch dahingehend als nachteilig erwiesen, dass die Lagerkugeln dadurch nur im Punktkontakt zu ihrer Laufbahn im inneren Lagerring stehen und somit im Bereich der Druckwinkelachse eine hohe Flächenpressung auf die Laufbahn verursachen, die für einen erhöhten Verschleiß dieser Laufbahn ursächlich ist. Zusätzlich treten durch die bei normaler Schmiegung die Schulterkante(n) der Laufbahn überlappenden, jedoch nach Aufbrauch der Schmiegung an der (den) Schulterkante(n) anliegenden Lagerkugeln im Bereich dieser Schulterkante(n) hohe Kantenspannungen auf, durch die der Verschleiß der Laufbahn für die Lagerkugeln noch weiter erhöht wird und durch die die Gebrauchsdauer solcher Rillen- oder Schrägkugellager erheblich abnimmt.

Eine Möglichkeit, die hohe Flächenpressung auf die Laufbahn des inneren Lagerrings im Bereich der Duckwinketachse der Wälzkörper zu vermeiden, ist durch die DE 43 34 195 A1 bekannt geworden, die ein Rachalwälzlager nach dem Oberbegriff des Anspruchs 1 offenbart. Bei den in dieser Druckschrift offenbarten, an sich als einreihiges Rillenkugellager oder Schrägkugellager ausgebildeten Radialwälzlagern werden die Wälzkörper jedoch nicht durch Kugeln sondern entweder teilweise oder vollständig durch so genannte Kugelscheiben gebildet, die mit zwei symmetrisch von einer Kugelgrundform abgeflachten sowie parallel zueinander angeordneten Seitenflächen ausgebildet sind. Die Breite dieser Kugelscheiben zwischen deren Seitenflächen ist dabei kleiner als der Abstand zwischen der Innenseite des äußeren Lagerrings und Außenseite des inneren Lagerrings ausgebildet, so dass beim Befüllen des Lagers die Kugelscheiben axial zum Lager durch den Abstand zwischen Innenring und Außenring in das Lager eingeführt und in die Laufbahn gedreht werden können. Da die Kugelscheiben im Gegensatz zu herkömmlichen Lagerkugeln eine konstante Drehachse aufweisen, sind die Laufflächen der Kugelscheiben mit dem gleichen Radius wie deren Laufbahnen in den Lagerringen ausgebildet, so dass die Kugelscheiben mit den Laufbahnen in Linienkontakt stehen. Durch diesen Linienkontakt wird somit anstelle des bei einreihigen Rillen- oder Schrägkugellagern auftretenden nachteiligen Punktkontaktes erreicht, dass zwischen den Kugelscheiben und den Laufbahnen eine gleichmäßig Flächenpressung mit niedrigem Spannungsniveau auftritt.

Im Betrieb und unter Last hat es sich jedoch gezeigt, dass bei derartigen Rillen- oder Schrägwälzlagern mit Kugelscheiben als Wälzkörper dadurch, dass die Laufbahnen in den Lagerringen breiter als die Kugelscheiben ausgebildet sind, die Kugelscheiben mit ihren an ihre geraden Seitenflächen angrenzenden Randpartien an den äußeren Randbereichen der Laufbahn im inneren Lagerring hohe Kantenspannungen verursachen, die nach wie vor für einen erhöhten Verschleiß dieser Laufbahn ursächlich sind und somit die Gebrauchsdauer solcher Rillen- oder Schrägwälzlager senken.

### Aufgabe der Erfindung

Ausgehend von den dargelegten Nachteilen der Lösungen des bekannten Standes der Technik liegt der Erfindung deshalb die Aufgabe zu Grunde, ein Radialwälzlager, insbesondere einreihiges Rillen- oder Schrägwälzlager mit Kugelscheiben als Wälzkörper, zu konzipieren, mit dem sowohl eine im Bereich der Druckwinkelachse auftretende hohe Flächenpressung auf die Laufbahn als auch eine an den äußeren Randbereichen der Laufbahn im inneren Lagerring auftretende hohe Kantenspannung wirksam vermieden und damit die Gebrauchsdauer des Rillen- oder Schrägwälzlagers erhöht wird.

### Beschreibung der Erfindung

Erfindungsgemäß wird diese Aufgabe durch ein Radialwälzlager nach Anspruch 1 gelöst.

Der Erfindung liegt somit die Erkenntnis zugrunde, dass es durch ein logarithmisch abfallendes Profil in den Bereichen der bis dahin auftretenden Kantenspannungen möglich ist, derartige Kantenspannungen wirksam zu vermeiden und gleichzeitig den für eine gleichmäßig niedrige Flächenspannung vorteilhaften Linienkontakt der Kugelscheiben zu ihren Laufbahnen beizubehalten. Dabei kann es vorteilhaft sein, das logarithmischen Profil wahlweise entweder an den äußeren Randbereichen der Laufbahn im inneren Lagerring oder an den an die Seitenflächen angrenzenden Randpartien der Laufflächen der Kugelscheiben oder sowohl an den Randbereichen der Laufbahn als auch an den Laufflächen der Kugelscheiben anzuordnen.

Des weiteren ist es bei dem erfindungsgemäß ausgebildeten Radialwälzlager vorgesehen, dass der Flächenanteil der mit einem logarithmisch abfallenden Profil ausgebildeten äußeren Randbereiche der Laufbahn des inneren Lagerrings und/oder der Randpartien der Laufflächen der Kugelscheiben jeweils etwa 10% bis 40 % der Fläche der Laufbahn des inneren Lagerrings beziehungsweise der Lauffläche einer Kugelscheibe beträgt. Dadurch beträgt der mit dem gleichen Radius ausgebildete Anteil der Laufflächen der Kugelscheiben und der Laufbahnfläche des inneren Lagerrings zwischen 60% und 90%, durch den eine hundertprozentige Schmiegung und Linienkontakt zwischen den Kugelscheiben und den Laufbahnen gewährleistet wird.

Bevorzugte Ausgestaltungen und vorteilhafte Weiterbildungen des erfindungsgemäß ausgebildeten einreihigen Radialwälzlagers werden in den Unteransprüchen beschrieben.

Als weitere Ausgestaltung des erfindungsgemäß ausgebildeten Radialwälzlagers wird es durch die Ansprüche 2 und 3 schließlich noch vorgeschlagen, dass der Radius des logarithmischen Profils an den äußeren Randbereichen der Laufbahn des inneren Lagerrings bevorzugt größer als der Radius der Laufflächen der Kugelscheiben ist und dass der Radius des logarithmischen Profils an den Randpartien der Laufflächen der Kugelscheiben bevorzugt kleiner als der Radius der Laufflächen der Kugelscheiben ist. Die Mittelpunkte aller Radien sind dabei jeweils übereinander bevorzugt auf der Druckwinkelachse des Radialwälzlagers angeordnet, so dass jeweils beidseitig zwischen den Randpartien der Laufflächen der Kugelscheiben und den Randbereichen der Laufbahn des inneren Lagerrings gleichmäßige große keilförmige Ringspalte entstehen. Es ist jedoch auch möglich, die Mittelpunkte der Radien für das logarithmische Profil an den Kugelscheiben und/oder an deren Laufbahn im inneren Lagerring beidseitig neben der Druckwinkelachse des Radialwälzlagers anzuordnen, mit dem besonderen Vorteil, dass dadurch die Radien tangential ineinander übergehen.

Das erfindungsgemäß ausgebildete Radialwälzlager weist somit gegenüber den aus dem Stand der Technik bekannten Radialwälzlagern den Vorteil auf, dass es durch die Anordnung logarithmisch abfallender Profile in den Bereichen der bis dahin auftretenden Kantenspannungen weder eine im Bereich der Druckwinkelachse auftretende hohe Flächenpressung auf die Laufbahn noch eine an den äußeren Randbereichen der Laufbahn im inneren Lagerring auftretende hohe Kantenspannung aufweist und sich dadurch durch eine hohe Gebrauchsdauer auszeichnet.

### Kurze Beschreibung der Zeichnungen

Eine bevorzugte Ausführungsform des erfindungsgemäß ausgebildeten Radialwälzlagers wird nachfolgend unter Bezugnahme auf die beigefügten Zeichnungen näher erläutert. Dabei zeigen:
- Figur 1: einen Querschnitt durch ein erfindungsgemäß ausgebildetes Radialwälzlager in Form eines Rillenwälzlagers;
- Figur 2: eine vergrößerte Darstellung der Einzelheit X des erfindungs- gemäß ausgebildeten Radialwälzlagers gemäß Figur 1;
- Figur 3: eine vergrößerte Darstellung des Kontaktbereichs zwischen den Wälzkörpern und der Laufbahn des inneren Lagerrings des erfindungsgemäß ausgebildeten Radialwälzlagers.

### Ausführliche Beschreibung der Zeichnungen

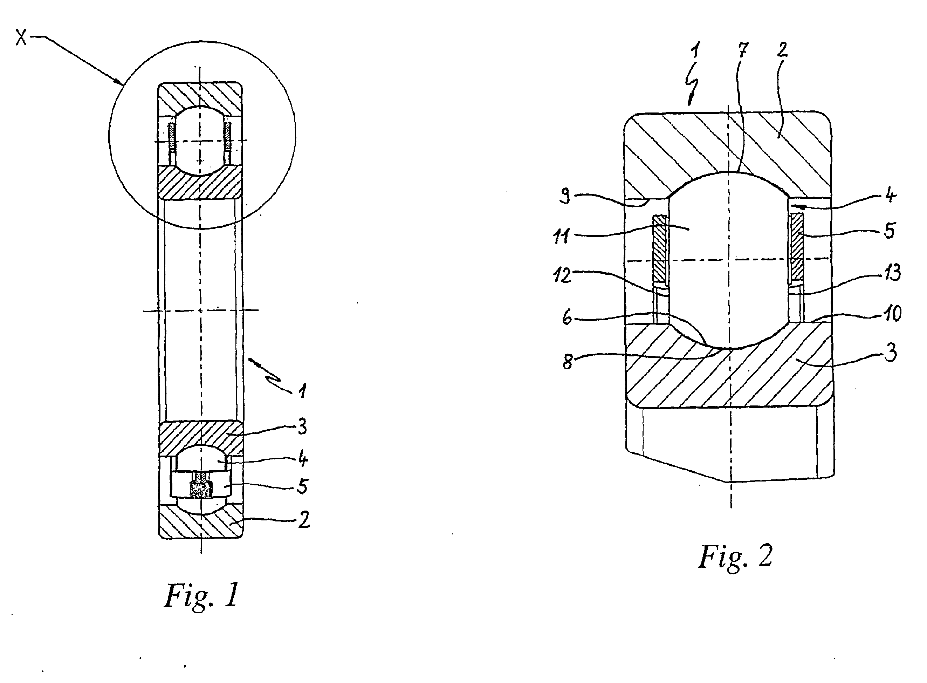

Aus Figur 1 geht deutlich ein als Rillenwälzlager ausgebildetes Radialwälzlager 1 hervor, welches ähnlich wie bekannte Rillenkugellager im Wesentlichen aus einem äußeren Lagerring 2 und einem inneren Lagerring 3 sowie aus einer Vielzahl zwischen den Lagerringen 2, 3 angeordneter Wälzkörper 4 besteht, die durch einen Lagerkäfig 5 in Umfangsrichtung in gleichmäßigen Abständen zueinander gehalten werden. Die in Figur 2 vergrößerte dargestellte Einzelheit X gemäß Figur 1 zeigt dabei, dass die Wälzkörper 4 als Kugelscheiben 11 mit jeweils zwei symmetrisch von einer Kugelgrundform abgeflachten sowie parallel zueinander angeordneten Seitenflächen 12, 13 ausgebildet sind und mit ihren Laufflächen 6 in zwei jeweils durch zwei Schultern begrenzte Laufbahnen 7, 8 abrollen, welche in die Innenseite 9 des äußeren Lagerrings 2 und in die Außenseite 10 des inneren Lagerrings 3 eingearbeitet sind.

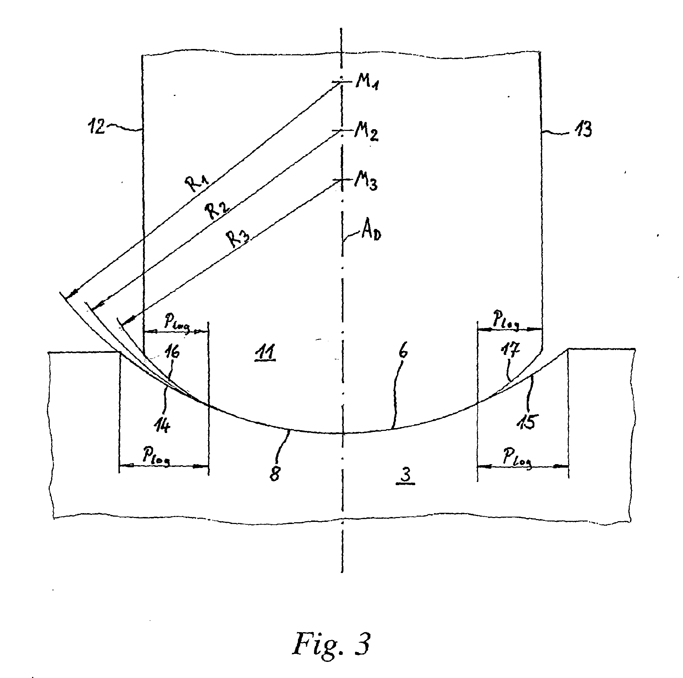

Durch Figur 3 wird desweiteren deutlich, dass zur Vermeidung einer an den äußeren Randbereichen 14, 15 der Laufbahn 8 im inneren Lagerring 3 auftretenden hohen Kantenspannung, sowohl die Laufbahn 8 im inneren Lagerring 3 jeweils an ihren äußeren Randbereichen 14, 15 als auch die Laufflächen 6 der Kugelscheiben 11 jeweils an ihren an die Seitenflächen 12, 13 angrenzenden Randpartien 16, 17 in ein logarithmisch abfallendes Profil P_{log} übergehen. Der Flächenanteil der mit einem logarithmisch abfallenden Profil P_{log} ausgebildeten äußeren Randbereiche 14, 15 der Laufbahn 8 des inneren Lagerrings 3 und der Randpartien 16, 17 der Laufflächen 6 der Kugelscheiben 11 beträgt dabei, wie zumindest andeutungsweise aus Figur 3 hervorgeht, jeweils etwa 30% der Fläche der Laufbahn 8 des inneren Lagerrings 3 beziehungsweise der Lauffläche 6 einer Kugelscheibe 11, so dass der mit dem gleichen Radius ausgebildete Anteil der Laufflächen 6 der Kugelscheiben 11 und der Fläche der Laufbahn 8 im inneren Lagerring 3 etwa 70% beträgt.

Ebenso ist aus Figur 3 ersichtlich, dass der Radius R₁ des logarithmischen Profils P_{log} an den äußeren Randbereichen 14, 15 der Laufbahn 8 des inneren Lagerrings 3 größer als der Radius R₂ der Laufflächen 6 der Kugelscheiben 11 ist, und dass der Radius R₃ des logarithmischen Profils P_{log} an den Randpartien 16, 17 der Laufflächen 6 der Kugelscheiben 11 kleiner als der Radius R₂ der Laufflächen 6 der Kugelscheiben 11 ist. Die Mittelpunkte M₁, M₂, M₃ aller Radien R₁, R₂, R₃ sind dabei deutlich sichtbar übereinander auf der Druckwinkelachse A_{D} des Radialwälzlagers 1 angeordnet, so dass jeweils beidseitig zwischen den Randpartien 16, 17 der Laufflächen 6 der Kugelscheiben 11 und den Randbereichen 14, 15 der Laufbahn 8 des inneren Lagerrings 3 gleichmäßige große keilförmige Ringspalte entstehen.

### Bezugszahlenliste

- 1: Radialwälzlager
- 2: äußerer Lagerring
- 3: innerer Lagerring
- 4: Wälzkörper
- 5: Lagerkäfig
- 6: Lauffläche von 4
- 7: Laufbahn in 2
- 8: Laufbahn in 3
- 9: Innenseite von 2
- 10: Außenseite von 3
- 11: Kugelscheiben
- 12: Seitenfläche von 11
- 13: Seitenfläche von 11
- 14: Randbereich von 8
- 15: Randbereich von 8
- 16: Randpartie von 6
- 17: Randpartie von 6

## Patentansprüche

1. Radialwälzlager, insbesondere einreihiges Rillen- oder Schrägwälzlager, welches im Wesentlichen aus einem äußeren Lagerring (2) und einem inneren Lagerring (3) sowie aus einer Vielzahl zwischen den Lagerringen (2, 3) angeordneter Wälzkörper (4) besteht, die durch einen Lagerkäfig (5) in Umfangsrichtung in gleichmäßigen Abständen zueinander gehalten werden und mit ihren Laufflächen (6) in zwei jeweils durch eine oder zwei Schultern begrenzte Laufbahnen (7, 8) abrollen, welche in die Innenseite (9) des äußeren Lagerrings (2) und in die Außenseite (10) des inneren Lagerrings (3) eingearbeitet sind, wobei die Wälzkörper (4) als Kugelscheiben (11) mit jeweils zwei symmetrisch von einer Kugelgrundform abgeflachten sowie parallel zueinander angeordneten Seitenflächen (12, 13) ausgebildet sind, **dadurch gekennzeichnet, dass** zumindest die Laufbahn (8) im inneren Lagerring (3) jeweils an ihren äußeren Randbereichen (14, 15) und/oder die Laufflächen (6) der Kugelscheiben (11) jeweils an ihren an die Seitenflächen (12, 13) angrenzenden Randpartien (16, 17) in ein logarithmisch abfallendes Profil (P_{log}) übergehen, wobei der Flächenanteil der mit einem logarithmisch abfallenden Profil (P_{log}) ausgebildeten äußeren Randbereiche (14, 15) der Laufbahn (8) des inneren Lagerrings (3) und/oder der Randpartien (16, 17) der Laufflächen (6) der Kugelscheiben (11) jeweils etwa 10% bis 40 % der Fläche der Laufbahn (8) des inneren Lagerrings (3) beziehungsweise der Lauffläche (6) einer Kugelscheibe (11) beträgt.

2. Radialwälzlager nach Anspruch 1, **dadurch gekennzeichnet, dass** der Radius (R₁) des logarithmischen Profils (P_{log}) an den äußeren Randbereichen (14, 15) der Laufbahn (8) des inneren Lagerrings (3) größer als der Radius (R₂) der Laufflächen (6) der Kugelscheiben (11) ist, wobei die Mittelpunkte (M₁, M₂) beider Radien (R₁, R₂) übereinander bevorzugt auf der Druckwinkelachse (A_{D}) des Radialwälzlagers (1) angeordnet sind.

3. Radialwälzlager nach Anspruch 1, **dadurch gekennzeichnet, dass** der Radius (R₃) des logarithmischen Profils (P_{log}) an den Randpartien (16, 17) der Laufflächen (6) der Kugelscheiben (11) kleiner als der Radius (R₂) der Laufflächen (6) der Kugelscheiben (11) ist, wobei die Mittelpunkte (M₂, M₃) beider Radien (R₂, R₃) untereinander bevorzugt auf der Druckwinkelachse (A_{D}) des Radialwälzlagers (1) angeordnet sind.

## Claims

1. Radial rolling bearing, in particular single-row deep-groove or angular-contact rolling bearing, which is composed substantially of an outer bearing ring (2) and an inner bearing ring (3) and of a multiplicity of rolling bodies (4) which are arranged between the bearing rings (2, 3) and which are held at uniform intervals from one another in the circumferential direction by means of a bearing cage (5) and which roll with their running surfaces (6) in two raceways (7, 8) delimited in each case by one or two shoulders and formed into the inner side (9) of the outer bearing ring (2) and into the outer side (10) of the inner bearing ring (3), with the rolling bodies (4) being formed as spherical discs (11) with in each case two side surfaces (12, 13) which are flattened from a spherical basic shape and are arranged parallel to one another, **characterized in that** at least the raceway (8) in the inner bearing ring (3), in each case at its outer edge regions (14, 15), and/or the running surfaces (6) of the spherical discs (11), in each case at their edge sections (16, 17) adjoining the side surfaces (12, 13), merge into a logarithmically falling profile (P_{log}), with that area fraction of the outer edge regions (14, 15) of the raceway (8) of the inner bearing ring (3) which is formed with a logarithmically falling profile (P_{log}), and/or the area fraction of the edge sections (16, 17) of the running surfaces (6) of the spherical discs (11), amounting to in each case approximately 10% to 40% of the area of the raceway (8) of the inner bearing ring (3) and/or of the running surface (6) of a spherical disc (11).

2. Radial rolling bearing according to Claim 1, **characterized in that** the radius (R₁) of the logarithmic profile (P_{log}) at the outer edge regions (14, 15) of the raceway (8) of the inner bearing ring (3) is greater than the radius (R₂) of the running surfaces (6) of the spherical discs (11), with the central points (M₁, M₂) of the two radii (R₁, R₂) being arranged one above the other preferably on the contact angle axis (A_{D}) of the radial rolling bearing (1).

3. Radial rolling bearing according to Claim 1, **characterized in that** the radius (R₃) of the logarithmic profile (P_{log}) at the edge sections (16, 17) of the running surfaces (6) of the spherical discs (11) is smaller than the radius (R₂) of the running surfaces (6) of the spherical discs (11), wherein the central points (M₂, M₃) of the two radii (R₂, R₃) are arranged one below the other preferably on the contact angle axis (A_{D}) of the radial rolling bearing (1).

## Revendications

1. Palier à roulement radial, en particulier palier à roulement oblique ou cannelé à une seule rangée, qui se compose essentiellement d'une bague de palier extérieure (2) et d'une bague de palier intérieure (3) ainsi que d'une pluralité de corps de roulement (4) disposés entre les bagues de palier (2, 3), qui sont maintenus à intervalles réguliers les uns des autres dans la direction périphérique par une cage de palier (5), et qui roulent avec leurs surfaces de roulement (6) dans deux pistes de roulement (7, 8) limitées par un ou deux épaulements, qui sont pratiquées dans le côté intérieur (9) de la bague de palier extérieure (2) et dans le côté extérieur (10) de la bague de palier intérieure (3), les corps de roulement (4) étant réalisés sous forme de rondelles sphériques (11) ayant à chaque fois deux faces latérales (12, 13) disposées parallèlement l'une à l'autre et aplaties symétriquement à partir d'une forme de base sphérique, **caractérisé en ce qu'**au moins la piste de roulement (8) dans la bague de palier intérieure (3) à chaque fois sur ses régions de bord extérieures (14, 15) et/ou les surfaces de roulement (6) des rondelles sphériques (11) à chaque fois sur leurs parties de bord (16, 17) adjacentes aux faces latérales (12, 13) se prolongent par un profilé de pente logarithmique (P_{log}), la proportion de surface des régions de bord extérieures (14, 15) réalisées avec un profilé de pente logarithmique (P_{log}) de la piste de roulement (8) de la bague de palier intérieure (3) et/ou des parties de bord (16, 17) des surfaces de roulement (6) des rondelles sphériques (11) représentant approximativement 10% à 40% de la surface de la piste de roulement (8) de la bague de roulement intérieure (3), respectivement de la surface de roulement (6) d'une rondelle sphérique (11).

2. Palier à roulement radial selon la revendication 1, **caractérisé en ce que** le rayon (R₁) du profilé logarithmique (P_{log}) au niveau des régions de bord extérieures (14, 15) de la piste de roulement (8) de la bague de palier intérieure (3) est supérieur au rayon (R₂) des surfaces de roulement (6) des rondelles sphériques (11), les centres (M₁, M₂) des deux rayons (R₁, R₂) étant disposés l'un au-dessus de l'autre de préférence sur l'axe angulaire de pression (A_{D}) du palier à roulement radial (1).

3. Palier à roulement radial selon la revendication 1, **caractérisé en ce que** le rayon (R₃) du profilé logarithmique (P_{log}) au niveau des parties de bord (16, 17) des surfaces de roulement (6) des rondelles sphériques (11) est inférieur au rayon (R₂) des surfaces de roulement (6) des rondelles sphériques (11), les centres (M₂, M₃) des deux rayons (R₂, R₃) étant disposés l'un en dessous de l'autre de préférence sur l'axe angulaire de pression (A_{D}) du palier à roulement radial (1).
